# EUROPÄISCHE PATENTSCHRIFT

(11) **EP 3 585 563 B1**
(45) Veröffentlichungstag und Bekanntmachung des Hinweises auf die Patenterteilung: **05.08.2026**
(21) Anmeldenummer: 18710332.0
(22) Anmeldetag: 19.02.2018
(51) Int. Cl.: B24B 13/005, B24B 9/14

(54) **BLOCKSTÜCK ZUM BLOCKEN EINER LINSE**
BLOCK PIECE FOR BLOCKING A LENS
MOLETTE DE GLANTAGE POUR LE GLANTAGE D'UNE LENTILLE

(30) Priorität: 24.02.2017 DE 102017001792
(43) Veröffentlichungstag der Anmeldung: 01.01.2020
(73) Patentinhaber: Schneider GmbH & Co. KG, 35112 Fronhausen (DE)
(72) Erfinder: SCHNEIDER, Gunter, 35037 Marburg (DE); HUTTENHUIS, Stephan, 35096 Niederweimar (DE); SIMMER, Thomas, 35216 Biedenkopf-Breidenstein (DE)
(74) Vertreter: Von Rohr Patentanwälte Partnerschaft mbB
(86) Internationale Anmeldenummer: PCT/EP2018/054040
(87) Internationale Veröffentlichungsnummer: WO 2018/153816

(56) Entgegenhaltungen:
- EP-A1- 2 140 971
- WO-A2-2013/075834
- US-A- 2 441 472
- US-A- 3 886 696
- US-A- 5 150 547

## Beschreibung

Die Erfindung betritt ein Blockstück zum Blocken einer Linse, insbesondere eines Brillenglases, gemäß Anspruch 1. Die Erfindung betrifft außerdem ein Kit aus einem Unterteil und mehreren Oberteilen zum Blocken einer Linse gemäß Anspruch 11.

Linsen, insbesondere optische Linsen, ganz besonders Brillengläser, werden zur (weiteren) Bearbeitung und/oder (weiteren) Beschichtung üblicherweise an einem sogenannten Blockstück als Halter mittels eines sogenannten Blockmaterials geblockt, d.h. mit einer fertigen oder noch zu bearbeitenden Seite mit dem Blockstück form-, stoff- und/oder kraftschlüssig verbunden und somit am Blockstück befestigt. Das Blockstück dient insbesondere dazu, die daran befestigte - also geblockte - Linse präzise und definiert für eine oder mehrere Bearbeitung/en und/oder Beschichtung/en zu halten. Das durch das Blocken resultierende Blockstück-Linsen-Paar kann in einer Bearbeitungsmaschine und/oder Beschichtungsanlage am Blockstück gehalten werden.

Insbesondere kann ein geblocktes Brillenglas an seiner Rück- und/oder Frontfläche im Hinblick auf seine optische Wirkung und/oder am Rand zur Einpassung in ein zugeordnetes Brillengestell mit geometrisch bestimmter (Fräsen/Drehen) oder geometrisch unbestimmter (Schleifen/Polieren) Schneide spanend bearbeitet und/oder auf seiner Rück- und/oder Frontfläche zur Erzielung zusätzlicher Wirkungen (Erhöhung der Kratzfestigkeit, Antireflexionseigenschaften, Verspiegelung, hydrophobe Eigenschaften, etc.) beschichtet werden. Ein solches Brillenglas kann bereits vor dem Blocken an einer oder beiden optische wirksamen Fläche und/oder am Rand bearbeitet und/oder beschichtet werden.

Unter Brillengläsern sind optische Linsen bzw. Linsenrohlinge (Blanks) für Brillen aus den gebräuchlichen transparenten Materialien, wie Kunststoff (z.B. Polycarbonat, CR-39, Hi-Index) oder Mineralglas, und mit beliebiger (Vor-)Form des Umfangsrandes der Linse bzw. des Linsenrohlings zu verstehen. Solche Brillengläser können auf der Fläche, an der sie geblockt werden, mit einer Folie, einem Lack oder dergleichen versehen sein, um diese Fläche vor Verunreinigung und Beschädigung zu schützen und/oder die Haftungseigenschaften zwischen Brillenglas und Blockmaterial zu verbessern.

Im Folgenden wird der Begriff "Linse" sowohl für eine Linse verwendet, die vorab an einer Seite (Rück- oder Frontfläche) bearbeitet und/oder beschichtet wurde und bei der die andere Seite noch zu bearbeiten und/oder zu beschichten ist, als auch für eine Linse, die noch an beiden Seiten zu bearbeiten und/oder zu beschichten ist.

Als Blockmaterial können Metalllegierungen mit niedriger Schmelztemperatur (z. B. ein Alloy) oder Thermoplaste, also thermoplastische Materialien, oder nicht-thermoplastische Materialien, insbesondere aushärtende Klebstoffe (z. B. lichtaushärtbare Kleber), aber auch Klebebänder oder dergleichen eingesetzt werden. Je nach eingesetztem Blockmaterial ergeben sich unterschiedliche Anforderungen bzw. Verfahrensabläufe beim Blocken.

Im Fokus der vorliegenden Erfindung steht das Blocken einer Linse ohne Auflageringe. Dabei wird die Linse bzw. eine Seite der Linse unmittelbar mit einem mit Blockmaterial versehenen Blockstück verbunden bzw. daran geblockt.

Außerdem steht im Fokus der vorliegenden Erfindung das Blocken einer Linse, bei dem mittels eines Blockmaterials eine ausschließlich stoffschlüssige Verbindung zwischen der Linse und genau einem Blockstück hergestellt wird. Aus diesem Blocken resultiert ein Blockstück-Linsen-Paar mit genau einer Linse und genau einem Blockstück. Dieses Blocken dient dazu, dass das resultierende Blockstück-Linsen-Paar in einer Bearbeitungsmaschine und/oder Beschichtungsanlage am Blockstück gehalten und eine optisch wirksame Fläche bzw. eine Rück- und/oder Frontfläche der Linse bearbeitet und/oder beschichtet werden kann. Eine Randbearbeitung zum Einpassen in ein Brillengestell ist also nicht bezweckt.

Im Vergleich zur Randbearbeitung muss das Blockstück-Linsen-Paar bei einer Flächenbearbeitung höheren Kräften und in anderen Richtungen wirkenden Kräften standhalten. Insbesondere müssen die Linse und das Blockstück starr, also auch zueinander drehfest, miteinander verbunden sein. Das Blockstück darf durch die bei der Flächenbearbeitung auf die Linse ausgeübten Kräfte nicht verformt werden bzw. nicht verformbar sein. Ein für dieses Blocken geeignetes Blockstück hat einen Durchmesser, der größer als der Durchmesser der letztlich erzeugten Gebrauchsfläche der Linse ist.

An dem Unterteil des Blockstücks kann das Blockstück-Linsen-Paar zum Bearbeiten und/oder Beschichten der Linse in einem Werkstückfutter Bearbeitungsvorrichtung und/oder Beschichtungsvorrichtungen gehalten werden, wobei das Blockstück-Linsen-Paar von dem Werkstückfutter lösbar ist.

Für die (weitere) Bearbeitung und/oder (weitere) Beschichtung einer Linse, für den Blockmaterialverbrauch, für die Stabilität der Verbindung zwischen Linse und Blockstück und für die Reduzierung von Schrumpfungen im Blockmaterial ist es vorteilhaft, die Linse möglichst präzise relativ zum Blockstück auszurichten. Dabei wird unter dem Begriff "ausrichten" das Drehen bzw. Kippen bzw. Rotieren der Linse im Raum um drei typischerweise senkrecht zueinander stehender Drehachsen bzw. Kippachsen bzw. Rotationsachsen - häufig als A-, B- bzw. C-Achse bezeichnet - in eine definierte Drehlage verstanden.

Die WO 2013/075834 A2 betrifft eine Vorrichtung zum Aufblocken von Brillengläsern. Die Vorrichtung weist eine Blockstückaufnahme für ein Blockstück auf. Die Blockstückaufnahme ist um zwei Kippachsen kipp- bzw. schwenkbar. Über die Kippachsen kann die Blockstückaufnahme und damit das Blockstück relativ zu einem darauf anzuordnenden Brillenglass verkippt bzw. in einer Kippbewegung bewegt und ausgerichtet werden. Ein mehrteiliges Blockstück ist nicht offenbart.

Die US 3,886,696 betriftt eine Befestigungsvorrichtung zum Schleifen optischer Linsen. Ein Linsenhalter der Befestigungsvorrichtung kann aus zwei Teilen bestehen, wobei zum Verbinden der beiden Teile einer der Teile konische Halterungen und der andere Teil dazu korrespondierende Ausnehmungen aufweist.

Die US 5,150,547 betrifft ein Blockstück mit einem Spannfutter, einem Blockkörper und einem Blockring. Mit dem Spannfutter ist das Blockstück an einer Bearbeitungsvorrichtung befestigbar. Der Blockring weist eine ringförmige Vertiefung auf, über welche der Blockring reibschlüssig mit dem Blockkörper verbindbar ist.

Aus der DE 10 2014 003 539 A1 ist ein Blockstück zum Blocken eines Brillenglasrohlings bekannt. Der Brillenglasrohling hat eine Fertigfläche und einer der Fertigfläche gegenüberliegende Bearbeitungsfläche zur Bearbeitung in einer Bearbeitungsvorrichtung. Das bekannte Blockstück weist ein Unterteil zum Halten des Blockstücks bei einer nachfolgenden Bearbeitung in der Bearbeitungsvorrichtung und ein insbesondere separates Oberteil für eine Befestigung des Brillenglasrohlings auf. Das Oberteil hat eine konvexe, plane oder konkave Blockfläche zum Blocken der Fertigfläche des Brillenglasrohlings.

Das bekannte Oberteil weist eine im Wesentlichen ebene Gegenfläche auf, die der Blockfläche gegenüberliegend angeordnet ist. Die Normale der Gegenfläche ist um 1° bis 10° gegen die Normale im Mittelpunkt der Blockfläche geneigt. Das bekannte Unterteil hat eine im Wesentlichen ebene und geneigte Lagerfläche, auf der das Oberteil mit seiner Gegenfläche lagerbar ist. Die Lagerfläche ist in einer Bearbeitungsposition so geneigt, dass die Normale der Lagerfläche um 1° bis 10° gegenüber einer vorbestimmten Bearbeitungsachse des Unterteils geneigt ist. Das bekannte Oberteil und das Unterteil sind gegeneinander so verdrehbar ausgebildet, dass die Normale im Mittelpunkt der Blockfläche gegenüber der Bearbeitungsachse des Unterteils parallel oder geneigt angeordnet ist. Die Größe der Neigung ist abhängig von der relativen Drehposition des Oberteils zum Unterteil.

Eine Aufgabe der vorliegenden Erfindung ist es, das bekannte Blockstück hinsichtlich der insbesondere automatischen Handhabung, der Verwendungsmöglichkeiten, des Aufbaus und/oder der Kosten zu verbessern.

Gemäß einem ersten Erfindungsaspekt wird die zuvor geschilderte Aufgabenstellung durch das Blockstück nach Anspruch 1 gelöst. Bevorzugte Ausgestaltungen dieses Erfindungsaspekts sind Gegenstand der diesbezüglichen Unteransprüche.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, in Bezug auf die übrigen Erfindungsaspekte entsprechend gelten.

Dies vorausgeschickt, wird im Folgenden die vorliegende Erfindung näher beschrieben.

Das erfindungsgemäße Blockstück weist ein Unterteil zum Halten des Blockstücks (z. B. in einem Werkstückfutter einer Bearbeitungsvorrichtung bzw. Beschichtungsvorrichtung) und ein separates Oberteil für eine Befestigung einer Linse auf. Die Zweckangabe "zum Halten des Blockstücks" ist dabei so zu verstehen, dass das Unterteil dazu geeignet sein muss, dass das Blockstück an dem Unterteil bei einer Bearbeitung und/oder Beschichtung gehalten werden kann.

Eine erste, unabhängige Grundidee des ersten Erfindungsaspekts besteht darin, dass das Unterteil und das Oberteil zueinander drehfest miteinander verbunden, vorzugsweise zueinander drehfest ineinander gesteckt sind. Bei dieser Ausführung sind insbesondere Drehungen des Oberteils relativ zum Unterteil in Umfangsrichtung nicht durchführbar. Das Unterteil und das Oberteil sind vorzugsweise derart miteinander verbunden, dass die Lage des Oberteils relativ zum Unterteil während eines Blockens, einer Bearbeitung und/oder einer Beschichtung der Linse unverändert bleibt.

Das erfindungsgemäße Blockstück gemäß der ersten Grundidee ermöglicht es, an dem Blockstück eine Linse zu blocken sowie eine an dem Blockstück geblockte Linse zu transportieren und zu bearbeiten, ohne dass sich die Lage des Oberteils relativ zum Unterteil verändert.

Eine zweite, unabhängige Grundidee des ersten Erfindungsaspekts besteht darin, dass das Unterteil aus Metall, insbesondere Aluminium, und das Oberteil aus Kunststoff hergestellt ist.

Das erfindungsgemäße Blockstück gemäß der zweiten Grundidee ermöglicht es, das Blockstück am Unterteil verschleißfrei oder zumindest verschleißarm zu halten, insbesondere einzuspannen (z. B. in einem Werkstückfutter einer Spindel einer Bearbeitungsmaschine), wohingegen das Oberteil, insbesondere vor dem Blocken und/oder bei der Bearbeitung der Linse, zerspanbar ist. Der beim Zerspanen des Oberteils entstehende Span kann einfach und kostengünstig entsorgt werden.

Eine dritte, unabhängige Grundidee des ersten Erfindungsaspekts besteht darin, dass das Blockstück mindestens eine Markierung oder Kodierung aufweist, die einen Typ des Blockstücks angibt.

Das erfindungsgemäße Blockstück gemäß der dritten Grundidee ermöglicht es, den Typ des Blockstücks manuell und/oder automatisch zu identifizieren. Dabei bezeichnet der Begriff "Typ" z. B. einen Zweck, einen Zustand und/oder eine Eigenschaft des Blockstücks, wie z. B. den Durchmesser einer Blockfläche des Blockstücks, die Krümmung der Blockfläche des Blockstücks, die prismatischen Verkippung der Blockfläche des Blockstücks und/oder einen Abnutzungsgrad des Blockstücks.

Vorzugsweise ist das Oberteil vom Unterteil, insbesondere durch Krafteinwirkung, ganz besonders durch Herausdrücken, lösbar.

Bei einer bevorzugten Ausführungsform hat das Oberteil eine Blockfläche für die Linse bzw. das Blockmaterial. Das Unterteil ist mit unterschiedlichen Oberteilen insbesondere nacheinander verbindbar. Die Oberteile unterscheiden sich dabei hinsichtlich des Durchmessers der Blockfläche, der Krümmung der Blockfläche und/oder der prismatischen Verkippung der Blockfläche. Das Oberteil ist austauschbar. Je nach Anforderungen beim Blocken und/oder Bearbeiten und/oder Beschichten kann wahlweise ein geeignetes Oberteil mit dem Unterteil lösbar verbunden werden. So kann z. B. ein Oberteil ausgewählt werden, dessen Blockfläche der zu blockenden Seite (Oberfläche) der Linse möglichst präzise entspricht. Auf diese Weise kann ein möglichst niedriger Blockmaterialverbrauch realisiert und/oder unerwünschte Effekte wie Schrumpfungen des Blockmaterials reduziert bzw. vermieden werden.

Die Normale im Mittelpunkt der Blockfläche des jeweiligen Oberteils kann gegenüber einer Zentralachse des Unterteils geneigt sein. Dies ermöglicht ein prismatisches Blocken. Vorteilhafterweise ist jedes Oberteil nur derart in das Unterteil steckbar, dass die Normale im Mittelpunkt der Blockfläche des jeweiligen Oberteils und die Zentralachse des Unterteils stets dieselbe Ebene aufspannen. Mit anderen Worten ist es möglich, Oberteil und Unterteil so zu kombinieren, dass das Prisma des resultierenden Blockstück stets in die gleiche Richtung verläuft bzw. die gleiche Drehlage in Umfangsrichtung hat.

Bevorzugt ist das Oberteil in das Unterteil eingepresst, insbesondere in einen starren Sitz, bevorzugt in einen Presssitz bzw. eine Übermaßpassung (Presspassung).

Es hat sich als vorteilhaft erwiesen, wenn das Oberteil mit dem Unterteil formschlüssig drehfest verbunden ist. Insbesondere stehen das Oberteil und das Unterteil in axialem und/oder radialem Eingriff. So können beispielsweise das Unterteil eine Aussparung und das Oberteil einen zur Aussparung des Unterteils komplementären Zapfen aufweisen, so dass das Oberteil nur derart in das Unterteil steckbar ist, dass der Zapfen des Oberteils in die Aussparung des Unterteils greift.

Der drehfeste Sitz des Oberteils im Unterteil kann also durch einen Presssitz, eine Presspassung und/oder durch Formschluss bewirkt sein. Vorzugsweise werden Presssitz bzw. Presspassung und Formschluss kombiniert, was die Drehfestigkeit erhöht.

Vorzugsweise weist das Blockstück bzw. dessen Unterteil eine Hinterschneidung zum formschlüssigen axialen Halten bzw. Einspannen auf. Dadurch kann der Halt des Blockstücks in einer Aufnahme für das Blockstück erhöht werden.

Bevorzugt ist das Oberteil ein Kunststoffspritzgussteil. Dies ermöglicht eine kostengünstige Herstellung.

Bei einer bevorzugten Ausführungsform des erfindungsgemäßen Blockstücks ist die Markierung bzw. Kodierung mindestens ein Kennzeichen und/oder mindestens eine Erhebung und/oder mindestens eine Ausnehmung und/oder am Oberteil, insbesondere am Umfang des Oberteils, vorgesehen. Dies ermöglicht eine einfache Identifizierung des Typs des Blockstücks.

Die Markierung bzw. Kodierung kann so angeordnet und/oder ausgebildet sein, dass sie dauerhaft am Blockstück verbleibt oder dass sie bei einer Bearbeitung der Linse zerspanbar ist.

Vorzugsweise weist das Blockstück zwei Markierungen oder Kodierungen auf, wobei die eine Markierung bzw. Kodierung so angeordnet und/oder ausgebildet ist, dass sie dauerhaft am Blockstück verbleibt, und die andere Markierung bzw. Kodierung so angeordnet und/oder ausgebildet ist, dass sie bei einer Bearbeitung der Linse zerspanbar ist. Insbesondere ist mittels der anderen Markierung bzw. Kodierung manuell und/oder automatisch feststellbar, ob das Oberteil abgenutzt, beschädigt bzw. auszutauschen ist, wohingegen mittels der einen Markierung bzw. Kodierung weiterhin der Typ des Blockstücks identifizierbar ist.

Vorteilhafterweise weist das Unterteil und/oder das Oberteil Mittel, insbesondere eine Rille, zum Halten einer geblockten Linse bzw. eines Blockstück-Linsen-Paars mittels einer Transportvorrichtung auf. Dies ermöglicht den Transport des Blockstück-Linsen-Paars ohne Berührung der Linse durch die Transportvorrichtung, insbesondere eines Saugers der Transportvorrichtung. Dadurch können Beeinträchtigungen bzw. Beschädigungen der Linse, insbesondere einer polierten Seite der Linse, vermieden werden.

Das erfindungsgemäße Blockstück ist für eine automatische bzw. maschinelle Handhabung geeignet. Insbesondere kann es in einem teil- und vollautomatisierten Linsenherstellungsprozess eingesetzt werden.

Gemäß einem zweiten Erfindungsaspekt wird die zuvor geschilderte Aufgabenstellung durch eine Verwendung eines Blockstücks, insbesondere eines Blockstücks wie zuvor beschrieben, zum Blocken einer Linse, insbesondere eines Brillenglases, gemäß Anspruch 24 gelöst.

Das Blockstück weist ein Unterteil zum Halten des Blockstücks und ein Oberteil für eine Befestigung der Linse auf. Erfindungsgemäß ist vorgesehen, dass die Linse wahlweise an dem Oberteil mittels eines haftenden Blockmaterials oder an dem Unterteil mittels einer Metalllegierung als Blockmaterial oder an einem auf dem Unterteil angebrachten Adapter mittels einer Metalllegierung als Blockmaterial geblockt wird.

Gemäß einem dritten Erfindungsaspekt wird die zuvor geschilderte Aufgabenstellung durch ein Kit aus einem Unterteil und mehreren Oberteilen zum Blocken einer Linse, insbesondere eines Brillenglases, mittels eines Blockmaterials gemäß Anspruch 18 gelöst.

Das Oberteil weist eine Blockfläche für die Linse bzw. das Blockmaterial auf. Die Oberteile unterscheiden sich voneinander hinsichtlich des Durchmessers der Blockfläche, der Krümmung der Blockfläche und/oder der prismatischen Verkippung der Blockfläche. Das Unterteil ist nacheinander mit jeweils einem der Oberteile zu einem Blockstück verbindbar. Das jeweilige Blockstück ist an dem Unterteil zum Bearbeiten und/oder Beschichten einer optisch wirksamen Fläche der Linse haltbar.

Gemäß einem vierten Erfindungsaspekt wird die zuvor geschilderte Aufgabenstellung durch eine Verwendung eines Blockstücks, insbesondere eines Blockstücks wie zuvor beschrieben, zum Blocken einer Linse, insbesondere eines Brillenglases, gemäß Anspruch 19 gelöst.

Das Blockstück hat ein Unterteil, an dem das Blockstück haltbar ist, und ein Oberteil für eine Befestigung der Linse für ein Bearbeiten und/oder Beschichten einer optisch wirksamen Fläche der Linse. Die Linse wird an dem Oberteil mittels eines Blockmaterials geblockt. Eine optisch wirksame Fläche der geblockten Linse wird bearbeitet und/oder beschichtet. Das Unterteil ist aus Metall und das Oberteil aus Kunststoff hergestellt. Alternativ oder zusätzlich werden das Unterteil und das Oberteil drehfest miteinander verbunden.

Die Erfindung wird nachfolgend anhand der Beschreibung bevorzugter Ausführungsbeispiele, zum Teil mit Bezugnahmen auf die Zeichnung, näher erläutert. Die oben beschriebenen und/oder in den Ansprüchen und/oder in der nachfolgenden Beschreibung offenbarten Merkmale können bedarfsweise miteinander kombiniert aber auch unabhängig voneinander realisiert werden, auch wenn dies nicht im Einzelnen ausdrücklich beschrieben ist.

In der Zeichnung zeigt
- Fig. 1: schematisch einen Schnitt durch eine bevorzugten Ausführungsform eines erfindungsgemäßen Blockstücks mit einer daran mittels eines Blockmaterials geblockten Linse,
- Fig. 2: schematisch in einer perspektivischen Ansicht ein Unterteil des Blockstücks aus Fig. 1,
- Fig. 3: schematisch in einer Draufsicht das Unterteil aus Fig. 2,
- Fig. 4: schematisch in einer Untersicht das Unterteil aus Fig. 2,
- Fig. 5: schematisch einen Schnitt durch das Unterteil aus Fig. 2 und
- Fig. 6: schematisch in einer Untersicht ein Oberteil des Blockstücks aus Fig. 1.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

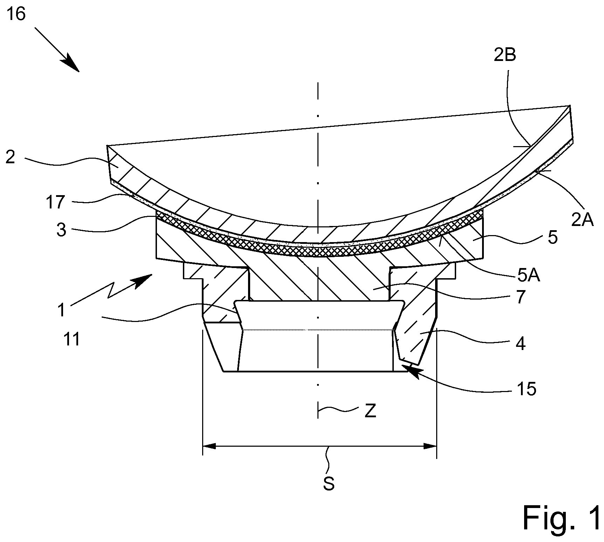

Fig. 1 zeigt schematisch einen Schnitt durch eine bevorzugte Ausführungsform eines erfindungsgemäßen Blockstücks 1 zum Blocken einer Linse 2, insbesondere eines Brillenglases. In Fig. 1 ist an dem Blockstück 1 eine Linse 2 mittels eines Blockmaterials 3 geblockt. Dargestellt ist hier also ein Blockstück-Linsen-Paar 16.

Bei dem hier dargestellten und bevorzugten Ausführungsbeispiel handelt es sich bei der Linse 2 um ein Brillenglas, also eine Linse 2 für eine Brille. Die Linse 2 besteht hier aus Kunststoff. Alternativ kann sie aus Glas oder dergleichen bestehen. Die Linse 2 weist in dem Beispiel einen Durchmesser von mehreren Zentimetern, insbesondere von mehr als 3 cm auf.

Die Linse 2 hat hier zwei optisch aktive Seiten, nämlich eine bereits fertig bearbeitete Blockseite 2A und eine noch zu bearbeitende Bearbeitungsseite 2B. Beide Seiten können eine beliebe Form haben. Beispielsweise kann die Blockseite 2A bzw. die Bearbeitungsseite 2B konvex, konkav oder plan sein. Dabei gilt eine Seite als konvex bzw. konkav, wenn sie dem Grunde nach erhaben, also nach außen gewölbt, bzw. vertieft, also nach innen gewölbt, ist.

Auf der Blockseite 2A der Linse 2 ist hier eine Schutzfolie 17 aufgeklebt.

Bei dem hier dargestellten und bevorzugten Ausführungsbeispiel wird als Blockmaterial 3 ein Thermoplast eingesetzt, vorzugsweise wie er in der WO 2011/018231 A1 beschrieben ist. Im Gegensatz zu einem lichtaushärtenden Blockmaterial (z. B. UV-Kleber) ist ein Thermoplast nach seinem Aushärten wieder verformbar, z. B. durch Erwärmen. Dies ist u. a. vorteilhaft beim sogenannten Abblocken, also dem Lösen einer geblockten Linse vom Blockstück. Um ein Abblocken einer mittels lichtaushärtendem Blockmaterial geblockten Linse zu ermöglichen, werden dem lichtaushärtenden Blockmaterial typischerweise Füllstoffe hinzugefügt, die allerdings seine Steifigkeit verringern. Dies kann zu Fehlern bei der Bearbeitung und/oder Beschichtung der Linse führen. Somit weist ein thermoplastisches Blockmaterial in einem Temperaturbereich von ca. 20°C bis 30°C typischerweise eine höhere Steifigkeit als ein lichtaushärtendes Blockmaterial auf.

Das erfindungsgemäße Blockstück 1 weist ein Unterteil 4 zum Halten des Blockstücks 1, z. B. in einem Werkstückfutter einer Bearbeitungsvorrichtung bzw. Beschichtungsvorrichtung, und ein separates Oberteil 5 für eine Befestigung einer Linse 2 auf. Vorzugsweise besteht das Blockstück 2 aus genau einem Unterteil 4 und genau einem Oberteil 5.

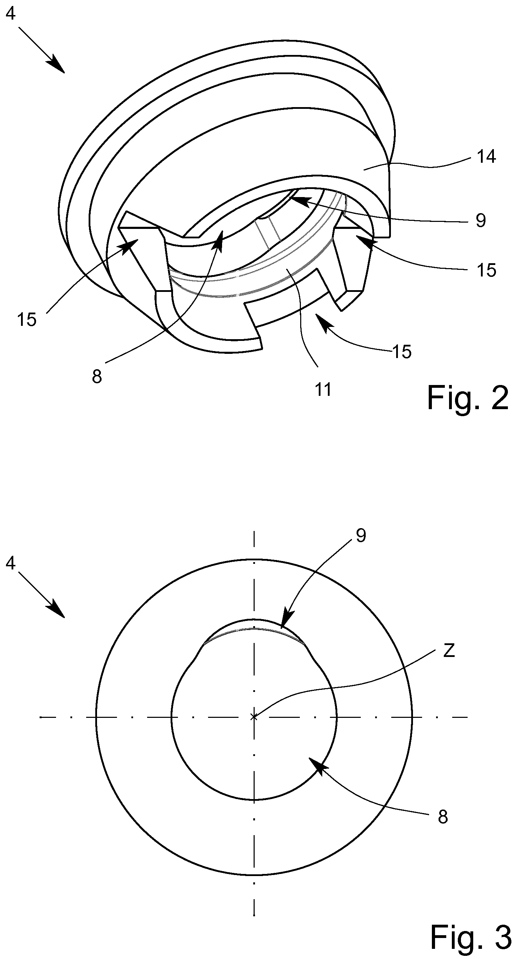

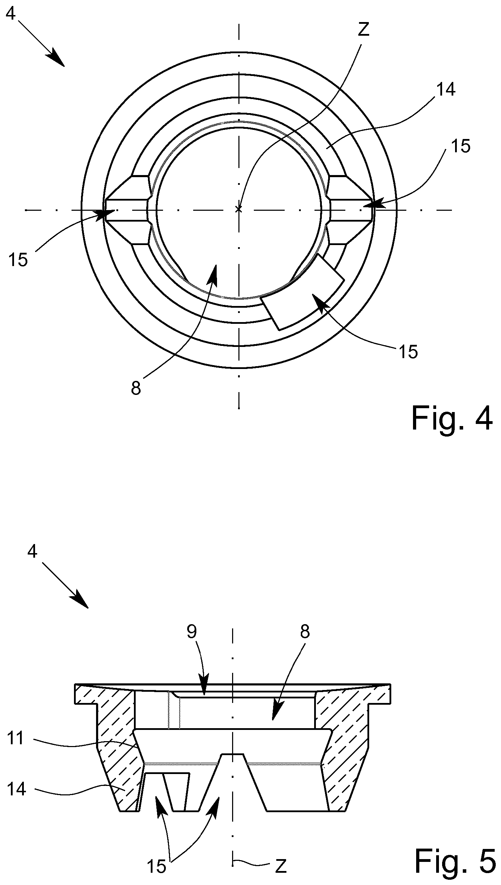

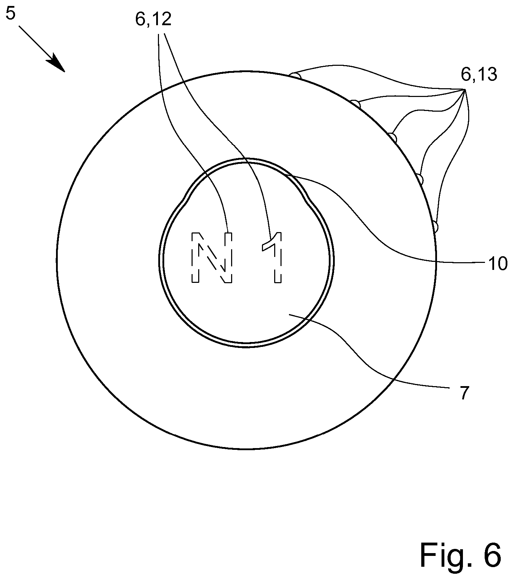

Fig. 2 bis 5 zeigen schematisch verschiedene Ansichten des Unterteils 4 des Blockstücks 1 aus Fig. 1. Fig. 6 zeigt schematisch in einer Untersicht das Oberteil 5 des Blockstücks 1 aus Fig. 1.

Bevorzugt weist das Blockstück 1 einen Spanndurchmesser von 43 mm auf, wie er in der DIN 58766 definiert und in Fig. 1 durch das Bezugszeichen S angedeutet ist.

Bei dem hier dargestellten und bevorzugten Ausführungsbeispiel sind das Unterteil 4 und das Oberteil 5 drehfest ineinander gesteckt. Insbesondere sind Drehungen des Oberteils 5 relativ zum Unterteil 4 in Umfangsrichtung des Oberteils 5 nicht durchführbar.

Bei dem hier dargestellten und bevorzugten Ausführungsbeispiel ist das Unterteil 4 aus Metall, insbesondere Aluminium oder Zink, ganz besonders aus eine AluminiumLegierung, und das Oberteil 5 aus Kunststoff, insbesondere einem zerspanbaren Kunststoff wie POM oder dergleichen, hergestellt. Vorzugsweise ist das Oberteil 5 ein Kunststoffspritzgussteil.

Bei dem hier dargestellten und bevorzugten Ausführungsbeispiel weist das Blockstück 1 mindestens eine Markierung 6 oder Kodierung 6 auf, die einen Typ des Blockstücks 1 angibt.

Bei dem hier dargestellten und bevorzugten Ausführungsbeispiel ist ein Steckelement 7 des Oberteils 5 in eine erste Aussparung 8 des Unterteils 4 gesteckt. Die erste Aussparung 8 kann, wie in den Fig. 1 bis 5 gezeigt, in axialer Richtung durchgehend ausgebildet sein und somit einen Durchgang bilden.

Bevorzugt ist das Oberteil 5 in das Unterteil 4 eingepresst, insbesondere in einen Presssitz bzw. eine Übermaßpassung (Presspassung). Durch den Presssitz bzw. die Übermaßpassung besteht kein Spiel zwischen dem Unterteil 4 und dem Oberteil 5. Dazu hat hier das Steckelement 7 einen größeren Umfang als die erste Aussparung 8, insbesondere einen um ca. 0,5 mm bis ca. 2 mm größeren Umfang. Vorzugsweise ist eine untere Kante des Steckelements 7 angeschrägt. Dies ist in Fig. 6 durch eine zweite Linie angedeutet und kann als Einsteck- bzw. Einpresshilfe dienen.

Bei dem hier dargestellten und bevorzugten Ausführungsbeispiel ist das Oberteil 5 mit dem Unterteil 4 formschlüssig drehfest verbunden. Der Formschluss wird hier dadurch erreicht, dass das Unterteil 4 eine zweite Aussparung 9 und das Oberteil 5 einen zur zweiten Aussparung 9 des Unterteils 4 komplementären Zapfen 10 aufweisen. Die zweite Aussparung 9 ist in Umfangsrichtung vom Unterteil 4 begrenzt. Das Oberteil 5 ist hier nur derart in das Unterteil 4 steckbar, dass der Zapfen 10 des Oberteils 5 in die zweite Aussparung 9 des Unterteils 4 greift, insbesondere in einer Übermaßpassung.

Die zweite Aussparung 9 des Unterteils 4 verläuft in Umfangsrichtung vorzugsweise bogenförmig. Dies erlaubt eine einfache Herstellung, insbesondere in Anbetracht des Materials des Unterteils 4, und gleichzeitig die Erzielung eines präzisen Formschlusses.

Vorzugsweise ist das Oberteil 5 vom Unterteil 4, insbesondere durch Krafteinwirkung, ganz besonders durch Herausdrücken, hier in axialer Richtung, lösbar.

Das Oberteil 5 hat eine Blockfläche 5A für die Linse 2 bzw. das Blockmaterial 3.

Bei dem hier dargestellten und bevorzugten Ausführungsbeispiel ist das Unterteil 4 mit unterschiedlichen Oberteilen 5 insbesondere nacheinander verbindbar. Die Oberteile 5 sind austauschbar. Die Oberteile 5 unterscheiden sich hinsichtlich des Durchmessers der Blockfläche 5A, der Krümmung der Blockfläche 5A und/oder der prismatischen Verkippung der Blockfläche 5A.

Eine prismatische Verkippung der Blockfläche 5A ist hier so zu verstehen, dass die Normale im Mittelpunkt der Blockfläche 5A des jeweiligen Oberteils 5 gegenüber einer Zentralachse Z des Unterteils 4 geneigt ist. Dies ermöglicht ein prismatisches Blocken. Es kann vorgesehen sein, dass jedes Oberteil 5 nur derart in das Unterteil 4 steckbar ist, dass die Normale im Mittelpunkt der Blockfläche 5A des jeweiligen Oberteils 5 und die Zentralachse Z des Unterteils 4 stets dieselbe Ebene aufspannen.

Bei dem hier dargestellten und bevorzugten Ausführungsbeispiel weist das Blockstück 1, nämlich das Unterteil 4, eine Hinterschneidung 11 zum formschlüssigen axialen Halten bzw. Einspannen des Blockstücks 1 auf. Beispielsweise können Innengreifer in die Hinterschneidung 11 des Unterteils 4 greifen und so das Blockstück 1 in einer Aufnahme fixieren. Die Hinterschneidung 11 ist vorzugsweise umlaufend um einen inneren Umfang des Unterteils 4 ausgebildet. Bevorzugt vergrößert sich die Hinterschneidung 11 in radialer Richtung von der Unterseite des Unterteils 4 aus gesehen auf das eingesteckte Oberteil 5 zu (in Fig. 1 also von unten nach oben).

Die Markierung 6 bzw. Kodierung 6 ist so ausgebildet, dass der Typ des Blockstücks 1, insbesondere des Oberteils 5, manuell und/oder automatisch identifizierbar ist. Der Typ kennzeichnet z. B. einen Zweck, einen Zustand und/oder eine Eigenschaft des Blockstücks 1, wie z. B. den Durchmesser der Blockfläche 5A, die Krümmung der Blockfläche 5A, die prismatischen Verkippung der Blockfläche 5A und/oder einen Abnutzungsgrad des Oberteils 5.

Die Markierung 6 bzw. Kodierung 6 des Blockstücks kann am Unterteil 4 und/oder am Oberteil 5, insbesondere am Umfang des Oberteils 5 und/oder an einer Unterseite des Steckelements 7 des Oberteils 5, vorgesehen sein. Die Markierung 6 bzw. Kodierung 6 kann ein Kennzeichen, beispielsweise mindestens eine Zahl und/oder mindestens ein Buchstabe sein. Die Markierung 6 bzw. Kodierung 6 kann auch mindestens eine Erhebung und/oder mindestens eine Ausnehmung sein.

Beispielhafte Markierungen 6 sind in Fig. 6 dargestellt. Hier ist ein Kennzeichen 12 auf einer Unterseite des Steckelements 7 des Oberteils 5 vorgesehen. Dieses Kennzeichen 12 verbleibt dauerhaft am Blockstück 1. Außerdem sind fünf Erhebungen 13 am Umfang des Oberteils 5 angeordnet. Die Erhebungen 13 bestehen aus dem gleichen Material wie das Oberteil 5. Vorzugsweise werden sie beim Spritzgießen des Oberteils 5 am Oberteil 5 angebracht. Die Erhebungen 13 sind bei einer Bearbeitung der Linse 2 zerspanbar. Selbst wenn die Erhebungen 13 teilweise oder vollständig zerspant sind, bleibt der Typ des Oberteils 5 anhand des Kennzeichens 12 identifizierbar.

Der Materialabtrag der Erhebungen 13 dient als Indikator für den Abnutzungsgrad des Oberteils 5. Der Materialabtrag der Erhebungen 13 ist erfassbar, z. B. mittels einer Kamera. So kann festgestellt werden, ob ein Oberteil 5 vor einem (weiteren) Blockvorgang auszutauschen ist oder nicht.

Vorteilhafterweise weist das Unterteil 4 und/oder das Oberteil 5 am Umfang eine Rille zum Halten einer geblockten Linse 2 bzw. eines Blockstück-Linsen-Paars 16 am Unterteil 4 und/oder Oberteil 5 mittels einer Transportvorrichtung auf.

Bei dem hier dargestellten und bevorzugten Ausführungsbeispiel hat das Unterteil 4 in einer Wandung 14 drei Ausnehmungen 15. Zwei der drei Ausnehmungen 15 weisen eine V-ähnliche Form auf und lassen sich durch eine zur Zentralachse Z senkrecht verlaufende Achse verbinden. Diese beiden Ausnehmungen 15 erlauben das Ablegen des Blockstücks 1 auf einer Auflage in zwei Drehlagen des Blockstücks 1 um die Zentralachse Z. Die dritte der drei Ausnehmungen 15 hat eine im Wesentlichen rechteckige Form und ist in Umfangsrichtung des Unterteils 4 versetzt zu den beiden anderen Ausnehmungen 15. Sie beschränkt das Ablegen des Blockstücks 1 auf genau eine Drehlage des Blockstücks 1 um die Zentralachse Z.

Das erfindungsgemäße Blockstück kann nun so verwendet werden, dass die Linse 2 wahlweise geblockt wird
a) an dem in das Unterteil 4 drehfest eingesteckten Oberteil 5 mittels eines haftenden Blockmaterials 3 (z. B. ein Thermoplast oder ein lichtaushärtendes Blockmaterial) oder
b) an dem Unterteil 4 mittels einer Metalllegierung als Blockmaterial 3 oder
c) an einem auf dem Unterteil 4 angebrachten Adapter mittels einer Metalllegierung als Blockmaterial 3.

Dies ermöglicht eine flexible und vielfältige Nutzung des Unterteils 4.

Bei der Wahlmöglichkeit a) kann je nach den Anforderungen beim Blocken und/oder Bearbeiten und/oder Beschichten der Linse 2 ein geeignetes Oberteil 5 ausgewählt und mit dem Unterteil 4 lösbar verbunden werden. So kann z. B. ein Oberteil 5 ausgewählt werden, dessen Blockfläche 5A der Blockseite 2A der Linse 2 möglichst präzise entspricht.

Vorzugsweise ist für die Wahlmöglichkeit b) die erste Aussparung 8 des Unterteils 4 in axialer Richtung nicht durchgehend sondern abgeschlossen.

Der für die Wahlmöglichkeit c) am Unterteil 4 anbringbare Adapter bildet vorzugsweise eine Aufnahme für die Metalllegierung als Blockmaterial 3.

### Bezugszeichenliste:

- 1: Blockstück
- 2: Linse
- 2A: Blockseite von 2
- 2B: Bearbeitungsseite von 2
- 3: Blockmaterial
- 4: Unterteil von 1
- 5: Oberteil von 1
- 5A: Blockfläche von 5
- 6: Markierung
- 7: Steckelement von 5
- 8: erste Aussparung von 4
- 9: zweite Aussparung von 4
- 10: Zapfen von 5
- 11: Hinterschneidung von 4
- 12: Kennzeichen
- 13: Erhebung
- 14: Wandung von 4
- 15: Ausnehmung von 14
- 16: Blockstück-Linsen-Paar
- 17: Schutzfolie
- S: Spanndurchmesser von 4
- Z: Zentralachse durch 4

## Patentansprüche

1. Blockstück zum Blocken einer Linse (2), insbesondere eines Brillenglases, mittels eines Blockmaterials (3), wobei das Blockstück (1) ein Unterteil (4) zum Halten des Blockstücks (1) in einem Werkstückfutter einer Bearbeitungsvorrichtung und ein Oberteil (5) für eine Befestigung der Linse (2) für ein Bearbeiten und/oder Beschichten einer optisch wirksamen Fläche der Linse (2) aufweist, wobei das Oberteil (5) eine Blockfläche (5A) für das Blockmaterial (3) aufweist,
wobei das Unterteil (4) und das Oberteil (5) zueinander drehfest miteinander verbunden sind,
**dadurch gekennzeichnet,**
**dass** das Oberteil (5) in das Unterteil (4) eingepresst ist.

2. Blockstück nach Anspruch 1, **dadurch gekennzeichnet, dass** das Oberteil (5) vom Unterteil (4) lösbar ist, insbesondere durch Krafteinwirkung, ganz besonders durch Herausdrücken, und/oder dass das Unterteil (4) und das Oberteil (5) zueinander drehfest ineinander gesteckt sind und/oder dass das Oberteil (5) mit dem Unterteil (4) formschlüssig drehfest verbunden ist, insbesondere in axialem und/oder radialem Eingriff steht.

3. Blockstück nach Anspruch 1 oder 2, **dadurch gekennzeichnet, dass** das Unterteil (4) eine Aussparung (9) aufweist, das Oberteil (5) einen zur Aussparung (9) des Unterteils (4) komplementären Zapfen (10) aufweist und dass das Oberteil (4) nur derart in das Unterteil (4) steckbar ist, dass der Zapfen (10) des Oberteils (5) in die Aussparung (9) des Unterteils (4) greift.

4. Blockstück nach einem der voranstehenden Ansprüche, **dadurch gekennzeichnet, dass** das Blockstück (1), insbesondere dessen Unterteil (4) eine Hinterschneidung (11) zum formschlüssigen axialen Halten bzw. Einspannen aufweist, und/oder dass das Unterteil (4) und/oder das Oberteil (5) Mittel, insbesondere eine Rille, zum Halten einer geblockten Linse (2) mittels einer Transportvorrichtung aufweist/en.

5. Blockstück nach einem der voranstehenden Ansprüche, **dadurch gekennzeichnet, dass** das Oberteil (5) ein Kunststoffspritzgussteil ist.

6. Blockstück nach einem der voranstehenden Ansprüche, **dadurch gekennzeichnet, dass** das Unterteil (4) mit unterschiedlichen Oberteilen (5) verbindbar ist, wobei sich die Oberteile (5) hinsichtlich des Durchmessers der Blockfläche (5A), der Krümmung der Blockfläche (5A) und/oder der prismatischen Verkippung der Blockfläche (5A) unterscheiden.

7. Blockstück nach einem der voranstehenden Ansprüche, **dadurch gekennzeichnet, dass** das Unterteil (4) aus Metall und das Oberteil (5) aus Kunststoff hergestellt ist und/oder dass das Blockstück (1) mindestens eine Markierung (6) oder Kodierung (6) aufweist, die einen Typ des Blockstücks (1) angibt.

8. Blockstück nach Anspruch 7, **dadurch gekennzeichnet, dass** die Markierung (6) oder Kodierung (6) mindestens ein Kennzeichen (12), mindestens eine Erhebung (13) und/oder mindestens eine Ausnehmung ist, und/oder dass die Markierung (6) oder Kodierung (6) am Umfang des Oberteils (5) vorgesehen ist.

9. Blockstück nach Anspruch 7 oder 8, **dadurch gekennzeichnet, dass** die Markierung (6) oder Kodierung (6) so angeordnet und/oder ausgebildet ist, dass sie dauerhaft am Blockstück (1) verbleibt und/oder dass sie bei einer Bearbeitung der Linse (2) zerspanbar ist.

10. Blockstück nach einem der voranstehenden Ansprüche, **dadurch gekennzeichnet, dass** das Blockstück (1) zwei Markierungen (6) oder Kodierungen (6) aufweist, dass die eine Markierung (6) oder Kodierung (6) so angeordnet und/oder ausgebildet ist, dass sie dauerhaft am Blockstück (1) verbleibt, und dass die andere Markierung (6) oder Kodierung (6) so angeordnet und/oder ausgebildet ist, dass sie bei einer Bearbeitung der Linse (2) zerspanbar ist.

11. Kit aus einem Unterteil (4) und mehreren Oberteilen (5) zum Blocken einer Linse (2), insbesondere eines Brillenglases, mittels eines Blockmaterials (3), wobei
- das Oberteil (5) eine Blockfläche (5A) für die Linse (2) bzw. das Blockmaterial (3) aufweist,
- sich die Oberteile (5) hinsichtlich des Durchmessers der Blockfläche (5A), der Krümmung der Blockfläche (5A) und/oder der prismatischen Verkippung der Blockfläche (5A) unterscheiden,
- das Unterteil (4) nacheinander mit jeweils einem der Oberteile (5) durch Einpressen des Oberteils (5) in das Unterteil (4) zu einem Blockstück (1) gemäß einem der voranstehenden Ansprüche verbindbar ist und
- das jeweilige Blockstück (1) an dem Unterteil (5) zum Bearbeiten und/oder Beschichten einer optisch wirksamen Fläche der Linse (2) haltbar ist.

12. Kit nach Anspruch 11, **dadurch gekennzeichnet, dass** jedes Oberteil (5) eine Blockfläche (5A) für die Linse (2) bzw. das Blockmaterial (3) aufweist, dass die Normale im Mittelpunkt der Blockfläche (5A) des jeweiligen Oberteils (5) gegenüber einer Zentralachse (Z) des Unterteils (4) geneigt ist und dass jedes Oberteil (5) nur derart in das Unterteil (4) steckbar ist, dass die Normale im Mittelpunkt der Blockfläche (5A) des jeweiligen Oberteils (5) und die Zentralachse (Z) des Unterteils (4) stets dieselbe Ebene aufspannen.

13. Verwendung eines Blockstücks (1) gemäß einem der Ansprüche 1 bis 10 zum Blocken einer Linse (2), insbesondere eines Brillenglases, wobei das Blockstück (1) ein Unterteil (4), an dem das Blockstück (1) haltbar ist, und ein Oberteil (5) für eine Befestigung der Linse (2) für ein Bearbeiten und/oder Beschichten einer optisch wirksamen Fläche der Linse (2) aufweist,
wobei die Linse (2) an dem Oberteil (5) mittels eines Blockmaterials (3) geblockt wird und
eine optisch wirksame Fläche der geblockten Linse (2) bearbeitet und/oder beschichtet wird,
**dadurch gekennzeichnet,**
**dass** das Unterteil (4) aus Metall und das Oberteil (5) aus Kunststoff hergestellt ist und/oder
**dass** das Unterteil (4) und das Oberteil (5) drehfest miteinander verbunden werden.

14. Verwendung eines Blockstücks (1) nach Anspruch 13, **dadurch gekennzeichnet, dass** das Oberteil (5) aus mehreren Oberteilen (5) derart ausgewählt wird, dass eine Blockfläche (5A) des Oberteils (5) einer Blockseite (2A) der Linse (2) möglichst präzise entspricht, und/oder dass als Blockmaterial (3) ein Thermoplast oder ein lichtaushärtender Klebstoff verwendet wird.

15. Verwendung eines Blockstücks (1) nach Anspruch 13 oder 14, **dadurch gekennzeichnet, dass** das Oberteil (5) vom Unterteil (4) durch Krafteinwirkung, insbesondere durch Herausdrücken, gelöst wird, und/oder dass das Unterteil (4) und ein anderes Oberteil (5) drehfest miteinander verbunden werden, wobei sich das andere Oberteil (5) hinsichtlich des Durchmessers einer Blockfläche (5A) des Oberteils (5), der Krümmung der Blockfläche (5A) und/oder der prismatischen Verkippung der Blockfläche (5A) unterscheidet, und dass eine andere Linse (2) an dem anderen Oberteil (5) mittels eines Blockmaterials (3) geblockt wird.

## Claims

1. Block piece for blocking a lens (2), in particular an eyeglass lens, by means of a block material (3), wherein the block piece (1) has a bottom part (4) for holding the block piece (1) in a workpiece chuck of a processing device and an upper part (5) for a fastening of the lens (2) for processing and/or coating an optically active surface of the lens (2), wherein the upper part (5) has a block surface (5) for the block material (3),
wherein the bottom part (4) and the upper part (5) are connected to one another in a torque-proof manner with respect to one another,
**characterized**
**in that** the upper part (5) is pressed into the bottom part (4).

2. Block piece according to claim 1, **characterized in that** the upper part (5) is detechable from the bottom part (4), in particular by application of force, quite especially by extrusion and/or **in that** the bottom part (4) and the upper part (5) are plugged into one another in a torque-proof manner with respect to one another and/or **in that** the upper part (5) is connected positively to the bottom part (4) in a torque-proof manner, in particular engaged axially and/or radially.

3. Block piece according to claim 1 or 2, **characterized in that** the bottom part (4) has a recess (9), the upper part (5) has a pin (10) that is complementary to the recess (9) of the bottom part (4), and **in that** the upper part (4) can be plugged into the bottom part (4) only in such a way that the pin (10) of the upper part (5) grips into the recess (9) of the bottom part (4).

4. Block piece according to one of the preceding claims, **characterized in that** the block piece (1), in particular its bottom part (4), has an undercut (11) for positive axial holding and/or clamping, and/or that the bottom part (4) and/or the upper part (5) has/have means, in particular a groove, for holding a blocked lens (2) by means of a transport device.

5. Block piece according to one of the preceding claims, **characterized in that** the upper part (5) is a plastic injection-molded part.

6. Block piece according to one of the preceding claims, **characterized in that** the bottom part (4) can be connected to various upper parts (5), wherein the upper parts (5) can be different with respect to the diameter of the block surface (5A), the curvature of the block surface (5A), and/or the prismatic tilting of the block surface (5A).

7. Block piece according to one of the preceding claims, **characterized in that** the bottom part (4) is made of metal, and the upper part (5) is made of plastic, and/or in that the block piece (1) has at least one marking (6) or coding (6), which indicates a type of block piece (1).

8. Block piece according to claim 7, **characterized in that** the marking (6) or coding (6) is at least one characteristic (12), is at least one protrusion (13) and/or at least one recess, and/or **in that** the marking (6) or coding (6) is provided on the periphery of the upper part (5).

9. Block piece according to claim 7 or 8, **characterized in that** the marking (6) or coding (6) is arranged and/or designed so that it remains permanently on the block piece (1), and/or **in that** the marking (6) or coding (6) is arranged and/or designed so that it can be machined in the case of processing of the lens (2).

10. Block piece according to one of the preceding claims, **characterized in that** the block piece (1) has two markings (6) or codings (6), **in that** the one marking (6) or coding (6) is arranged and/or designed so that it remains permanently on the block piece (1), and **in that** the other marking (6) or coding (6) is arranged and/or designed so that it can be machined in the case of processing of the lens (2).

11. Kit of a bottom part (4) and multiple upper parts (5) for blocking a lens (2), in particular an eyeglass lens, by means of a block material (3), wherein
- the upper part (5) has a block surface (5A) for the lens (2) and/or the block material (3),
- the upper parts (5) are different with respect to the diameter of the block surface (5A), the curvature of the block surface (5A), and/or the prismatic tilting of the block surface (5A),
- the bottom part (4) can be connected in succession with respectively one of the upper parts (5) to a block piece (1) according to one of the preceding claims by pressing the upper part (5) into the bottom part (4), and
- the respective block piece (1) can be held on the bottom part (5) for processing and/or coating an optically active surface of the lens (2).

12. Kit according to claim 11, **characterized in that** each upper part (5) has a block surface (5A) for the lens (2) and/or the block material (3), **in that** the normal at the midpoint of the block surface (5A) of the respective upper part (5) is inclined relative to a central axis (Z) of the bottom part (4), and **in that** each upper part (5) can be plugged into the bottom part (4) only in such a way that the normal at the midpoint of the block surface (5A) of the respective upper part (5) and the central axis (Z) of the bottom part (4) always span the same plane.

13. Use of a block piece (1), according to one of claims 1 to 10 for blocking a lens (2), in particular an eyeglass lens, wherein the block piece (1) has a bottom part (4), on which the block piece (1) can be held, and an upper part (5) for a fastening of the lens (2) for processing and/or coating of an optically active surface of the lens (2), wherein the lens (2) is blocked on the upper part (5) by means of a block material (3), and
an optically active surface of the blocked lens (2) is processed and/or coated, **characterized**
**in that** the bottom part (4) is made of metal, and the upper part (5) is made of plastic, and/or
**in that** the bottom part (4) and the upper part (5) are connected to one another in a torque-proof manner.

14. Use of a block piece (1) according to claim 13, **characterized in that** the upper part (5) is selected from multiple upper parts (5) in such a way that a block surface (5A) of the upper part (5) corresponds as precisely as possible to a block side (2A) of the lens (2), and/or **in that** a thermoplastic or a light-curing adhesive is used as block material (3).

15. Use of a block piece (1) according to claim 13 or 14, **characterized in that** the upper part (5) is detached from the bottom part (4) by application of force, in particular by extrusion, and/or **in that** the bottom part (4) and another upper part (5) are connected to one another in a torque-proof manner, wherein the other upper part (5) is different with respect to the diameter of a block surface (5A) of the upper part (5), the curvature of the block surface (5A) and/or the prismatic tilting of the block surface (5A), and **in that** another lens (2) is blocked on the other upper part (5) by means of a block material (3).

## Revendications

1. Pièce de blocage pour bloquer une lentille (2), en particulier un verre de lunettes, au moyen d'un matériau de blocage (3), la pièce de blocage (1) présentant une partie inférieure (4) pour maintenir la pièce de blocage (1) dans un mandrin d'un dispositif d'usinage et une partie supérieure (5) pour une fixation de la lentille (2) pour un usinage et/ou un revêtement d'une surface optiquement active de la lentille (2), la partie supérieure (5) présentant une surface de blocage (5A) pour le matériau de blocage (3),
la partie inférieure (4) et la partie supérieure (5) étant connectées l'une à l'autre de manière solidaire en rotation,
**caractérisée en ce que**
la partie supérieure (5) est pressée dans la partie inférieure (4).

2. Pièce de blocage selon la revendication 1, **caractérisée en ce que** la partie supérieure (5) peut être détachée de la partie inférieure (4), en particulier par application d'une force, tout particulièrement par pression, et/ou **en ce que** la partie inférieure (4) et la partie supérieure (5) sont emboîtées l'une dans l'autre de manière solidaire en rotation et/ou **en ce que** la partie supérieure (5) est connectée à la partie inférieure (4) de manière solidaire en rotation par complémentarité de forme, en particulier est en prise axiale et/ou radiale.

3. Pièce de blocage selon la revendication 1 ou 2, **caractérisée en ce que** la partie inférieure (4) présente un évidement (9), la partie supérieure (5) présente un tenon (10) complémentaire de l'évidement (9) de la partie inférieure (4) et **en ce que** la partie supérieure (4) ne peut être emboîtée dans la partie inférieure (4) que de telle sorte que le tenon (10) de la partie supérieure (5) s'engage dans l'évidement (9) de la partie inférieure (4).

4. Pièce de blocage selon l'une quelconque des revendications précédentes, **caractérisée en ce que** la pièce de blocage (1), en particulier sa partie inférieure (4), présente une contre-dépouille (11) pour le maintien ou le serrage axial par complémentarité de forme, et/ou **en ce que** la partie inférieure (4) et/ou la partie supérieure (5) présente/présentent des moyens, en particulier une rainure, pour maintenir une lentille bloquée (2) au moyen d'un dispositif de transport.

5. Pièce de blocage selon l'une quelconque des revendications précédentes, **caractérisée en ce que** la partie supérieure (5) est une pièce en matière plastique moulée par injection.

6. Pièce de blocage selon l'une quelconque des revendications précédentes, **caractérisée en ce que** la partie inférieure (4) peut être connectée à différentes parties supérieures (5), les parties supérieures (5) se différenciant en ce qui concerne le diamètre de la surface de blocage (5A), la courbure de la surface de blocage (5A) et/ou le basculement prismatique de la surface de blocage (5A).

7. Pièce de blocage selon l'une quelconque des revendications précédentes, **caractérisée en ce que** la partie inférieure (4) est fabriquée en métal et la partie supérieure (5) en matière plastique et/ou **en ce que** la pièce de blocage (1) présente au moins un marquage (6) ou codage (6) qui indique un type de la pièce de blocage (1).

8. Pièce de blocage selon la revendication 7, **caractérisée en ce que** le marquage (6) ou codage (6) est au moins un signe distinctif (12), au moins un rehaussement (13) et/ou au moins un évidement, et/ou **en ce que** le marquage (6) ou codage (6) est prévu sur la périphérie de la partie supérieure (5).

9. Pièce de blocage selon la revendication 7 ou 8, **caractérisée en ce que** le marquage (6) ou codage (6) est disposé et/ou réalisé de telle sorte qu'il reste de manière permanente sur la pièce de blocage (1) et/ou **en ce qu'**il peut être usiné par enlèvement de copeaux lors d'un usinage de la lentille (2).

10. Pièce de blocage selon l'une quelconque des revendications précédentes, **caractérisée en ce que** la pièce de blocage (1) présente deux marquages (6) ou codages (6), **en ce qu'**un marquage (6) ou codage (6) est disposé et/ou réalisé de telle sorte qu'il reste de manière permanente sur la pièce de blocage (1), et **en ce que** l'autre marquage (6) ou codage (6) est disposé et/ou réalisé de telle sorte qu'il peut être usiné par enlèvement de copeaux lors d'un usinage de la lentille (2).

11. Kit constitué d'une partie inférieure (4) et de plusieurs parties supérieures (5) pour bloquer une lentille (2), en particulier un verre de lunettes, au moyen d'un matériau de blocage (3),
- la partie supérieure (5) présentant une surface de blocage (5A) pour la lentille (2) ou le matériau de blocage (3),
- les parties supérieures (5) se différenciant en ce qui concerne le diamètre de la surface de blocage (5A), la courbure de la surface de blocage (5A) et/ou le basculement prismatique de la surface de blocage (5A),
- la partie inférieure (4) pouvant être connectée successivement à respectivement l'une des parties supérieures (5) par pressage de la partie supérieure (5) dans la partie inférieure (4) en une pièce de blocage (1) selon l'une quelconque des revendications précédentes et
- la pièce de blocage (1) respective pouvant être maintenue sur la partie inférieure (5) pour l'usinage et/ou le revêtement d'une surface optiquement active de la lentille (2).

12. Kit selon la revendication 11, **caractérisé en ce que** chaque partie supérieure (5) présente une surface de blocage (5A) pour la lentille (2) ou le matériau de blocage (3), **en ce que** la normale au centre de la surface de blocage (5A) de la partie supérieure (5) respective est inclinée par rapport à un axe central (Z) de la partie inférieure (4) et **en ce que** chaque partie supérieure (5) ne peut être emboîtée dans la partie inférieure (4) que de telle sorte que la normale au centre de la surface de blocage (5A) de la partie supérieure (5) respective et l'axe central (Z) de la partie inférieure (4) définissent toujours le même plan.

13. Utilisation d'une pièce de blocage (1) selon l'une quelconque des revendications 1 à 10 pour bloquer une lentille (2), en particulier un verre de lunettes, la pièce de blocage (1) présentant une partie inférieure (4), sur laquelle la pièce de blocage (1) peut être maintenue, et une partie supérieure (5) pour une fixation de la lentille (2) pour un usinage et/ou un revêtement d'une surface optiquement active de la lentille (2),
la lentille (2) étant bloquée sur la partie supérieure (5) au moyen d'un matériau de blocage (3) et
une surface optiquement active de la lentille (2) bloquée étant usinée et/ou revêtue,
**caractérisée en ce que**
la partie inférieure (4) est fabriquée en métal et la partie supérieure (5) en matière plastique et/ou
la partie inférieure (4) et la partie supérieure (5) sont connectées l'une à l'autre de manière solidaire en rotation.

14. Utilisation d'une pièce de blocage (1) selon la revendication 13, **caractérisée en ce que** la partie supérieure (5) est choisie parmi plusieurs parties supérieures (5) de telle sorte qu'une surface de blocage (5A) de la partie supérieure (5) corresponde le plus précisément possible à un côté de blocage (2A) de la lentille (2), et/ou **en ce qu'**un thermoplastique ou un adhésif photodurcissable est utilisé en tant que matériau de blocage (3).

15. Utilisation d'une pièce de blocage (1) selon la revendication 13 ou 14, **caractérisée en ce que** la partie supérieure (5) est détachée de la partie inférieure (4) par application d'une force, en particulier par pression, et/ou **en ce que** la partie inférieure (4) et une autre partie supérieure (5) sont connectées l'une à l'autre de manière solidaire en rotation, l'autre partie supérieure (5) se différenciant en ce qui concerne le diamètre d'une surface de blocage (5A) de la partie supérieure (5), la courbure de la surface de blocage (5A) et/ou le basculement prismatique de la surface de blocage (5A), et **en ce qu'**une autre lentille (2) est bloquée sur l'autre partie supérieure (5) au moyen d'un matériau de blocage (3).
